# EUROPEAN PATENT APPLICATION

(11) **EP 2 101 441 A1**
(43) Date of publication of application: **16.09.2009**
(21) Application number: 08394008.0
(22) Date of filing: 13.03.2008
(51) Int. Cl.: H04L 9/08

(54) **An optical communication system and method**

(71) Applicant: University College Cork-National University of Ireland, Cork, Cork (IE)
(72) Inventor: Townsend, Paul David, County Cork (IE); Choi, Iris Pui Suen, Cork (IE)
(74) Representative: Weldon, Michael James

(57) **Abstract**

The invention provides time-synchronised transmission of data on the (polarisation or phase-modulated) QKD channel and the (on-off modulated) conventional channel such that a QKD bit is only transmitted when a zero, or sequence of zeros, is transmitted on the conventional channel. Also, there is co-directional propagation of the QKD and conventional channel. Further, there is dispersion management through wavelength selection or control of fibre properties or other means such that the 'walk-off' in time of the QKD pulses and the Raman pulses generated by the ones on the conventional channel is less than or of the order of one bit period. The latter can be achieved, for example, by placing the conventional and QKD channel wavelengths close to the point where the group velocity-induced time delay for optical pulses propagating in the fibre reaches a minimum. This dispersion minimum occurs at a wavelength of 1.3microns in standard fibre.

## Description

### Introduction

Quantum cryptography, or quantum key distribution (QKD) as it is more accurately known, exploits fundamental quantum properties of single photons of light in order to guarantee the security of information transmitted over optical communication networks. The technique was disclosed by IBM in the mid-1980s and has since been the subject of much research activity which has recently culminated in the first commercial QKD product releases (see, for example, www.idquantique.com/ and www.magiqtech.com/).

In order to be cost-effective, QKD channels must typically operate over the same fibre infrastructure as conventional optical communication channels. These conventional channels may carry ordinary unencrypted data, data that is encrypted using the keys exchanged on the QKD channel, timing and control information that is required for operation of the QKD channel, or a combination of the above. US5675648 describes this combined conventional/quantum channel transmission, whilst US5768378 describes QKD on an example (multi-user) fibre network infrastructure, which is of relevance to the current case. However, QKD employs (at most) a single photon per bit of transmitted information; a value that is approximately 7-8 orders of magnitude lower than for a typical conventional optical communication system. As a result, cross-talk from conventional data channels operating over the network can easily prevent operation of the QKD channel unless suitable cross-talk mitigation schemes are employed. This is particularly true in multi-channel, wavelength-division-multiplexed (WDM) systems where the cross-talk is usually dominated by spontaneous Raman scattering. The latter converts a proportion of the photons from each conventional data channel to new wavelengths, spread over a wide (∼300nm) range centred on the original channel wavelength. If these Raman photons lie within the wavelength band allocated to the QKD channel then cross-talk will occur. The level of cross-talk and its impact on the performance of the QKD system is described in detail in the paper "Backscattering limitation for fiber-optic quantum key distribution systems" by Subacius, D.; Zavriyev, A.; Trifonov, A., Applied Physics Letters 86, 011103 (2005).

Two main approaches to system design have been employed previously to reduce Raman cross-talk as follows.

### QKD Channel Out of Band

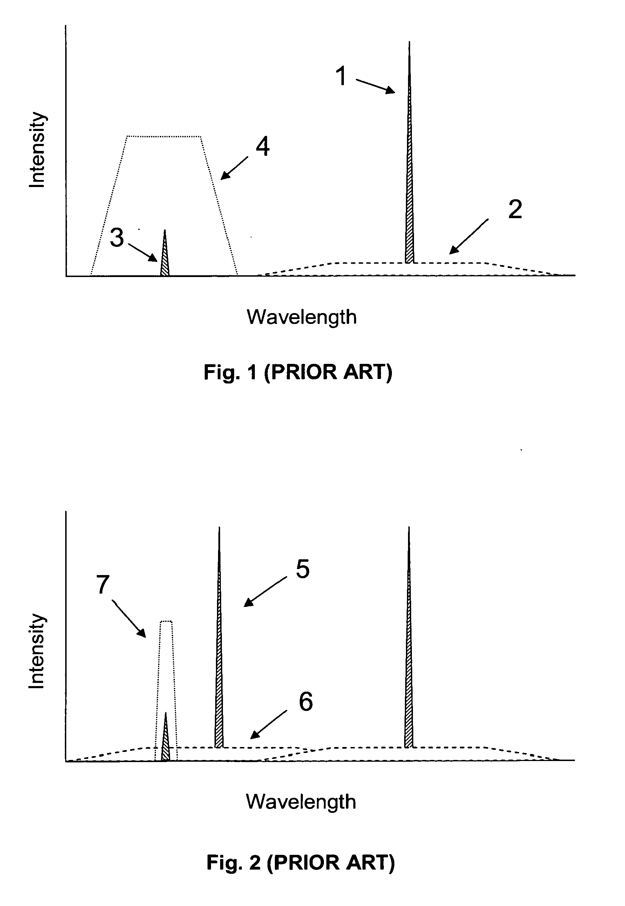

The QKD channel wavelength λ_{QKD} is chosen to lie outside of the Raman bands of the conventional channels. A relatively low-cost, broad-band, conventional optical filter can then be used to block the Raman photons from entering the QKD receiver. Such an approach is described in the paper "Experimental characterization of the separation between wavelength-multiplexed quantum and classical communication channels", Nweke, N. I.; Toliver, P.; Runser, R. J.; McNown, S. R.; Khurgin, J. B.; Chapuran, T. E.; Goodman, M. S.; Hughes, R. J.; Peterson, C. G.; McCabe, K.; Nordholt, J. E.; Tyagi, K.; Hiskett, P.; Dallmann, N., Applied Physics letters 87, 174103 (2005) published on October 21, 2005. This scheme is illustrated in Fig. 1, which shows a schematic diagram of the optical spectrum at the output of an optical fibre carrying a high intensity, conventional data channel (1) and a low intensity, quantum key distribution channel (QKD) (3). Spontaneous Raman scattering in the fibre converts a proportion of the photons from the conventional channel to new frequencies resulting in a broad spectral 'pedestal' (2). A filter with an appropriate broad passband (4) can then be used to isolate the QKD channel from the conventional channel and its Raman background.

### QKD Channel In Band

In many optical communication systems, wavelength division multiplexing (WDM) techniques are employed to allow a single fibre to support multiple conventional data channels. This situation is illustrated schematically in Fig. 2 where an additional data channel (5) and associated Raman scattering (6) are shown in the output spectrum. In this case there is no Raman-free region of the spectrum and the QKD channel must operate in the presence of a significant level of Raman-induced cross-talk from the conventional channel (5). Without mitigation this cross-talk would generate significant errors in the QKD channel thus preventing secure operation. In practice, the conventional data channels may be closely spaced (a typical frequency separation is 100GHz) and large in number (64 or more) so that the Raman spectra of multiple channels overlap at λ_{QKD}. Nevertheless, it may still be possible operate the QKD channel if a specifically-tailored, narrow band-pass optical notch filter centred on λ_{QKD} with very high out-of-band blocking is used to suppress a large fraction of the Raman scattering. Such an arrangement is described in US7248695. This is effective because of the broad bandwidth of the Raman scattering when compared with a typical QKD channel bandwidth (<1nm), but nevertheless some Raman photons will still reach the QKD detector.

However, these approaches suffer from two major drawbacks. Firstly, in some network applications the out of band approach cannot be employed because no Raman-free wavelength windows exist. Secondly, for the in band approach the notch filter is expensive to implement as narrow band-pass filters with high out of band blocking are costly to manufacture and both the filters and QKD optical source will require temperature control in order that the wavelengths remain precisely matched.

### Statements of Invention

According to the invention, there is provided an optical communication system comprising a transmitter comprising means for transmitting QKD data and a conventional data channel on a waveguide, the transmitter performing time synchronisation to transmit a QKD bit when a zero or sequence of zeros is transmitted on the conventional data channel.

In one embodiment, the QKD bits are also transmitted when a data one or sequence of ones is transmitted on the conventional channel, but are subsequently discarded during the post-transmission phase of the QKD protocol.

In another embodiment, the transmitter transmits the channels co-directionally.

In a further embodiment, the system has optical characteristics such that walk-off in time of the QKD and conventional data channels is less than or of the order of one conventional channel bit period.

In one embodiment, the transmission wavelength is at or close to a minimum for a group delay vs. wavelength characteristic curve for the waveguide.

In another embodiment, dispersion compensation components or systems are employed to reduce walk-off to the required level.

In a further embodiment, the wavelength is in the range of 1.2 to 1.65 µm.

In one embodiment, the system comprises coarse wavelength division multiplexers and de-multiplexers and/or other optical filters.

In another embodiment, the system is a multi-user passive optical network.

In a further embodiment, the users share the available network capacity by employing a time-division-multiple-access protocol such that the QKD and conventional channels transmitted by each user operate in burst-mode.

In one embodiment, the bursts of conventional and QKD data generated by a given user are bit-synchronous as in claim 1, but bursts generated by different users are not bit-synchronous with respect to each other.

### Detailed Description of the Invention

The invention will be more clearly understood from the following description of some embodiments thereof, given by way of example only with reference to the accompanying drawings in which:-
Figs. 1 and 2 are diagrams concerning the prior art, as set out above;
Fig. 3 is a diagram of a system of the invention;
Fig. 4 is a plot illustrating how a fibre is chosen; and
Fig. 5 is a diagrammatic plot illustrating optical communication of the invention; and
Figs. 6 and 7 are more detailed plots, illustrating experimental verification of the diagrammatic plot of Fig. 5.

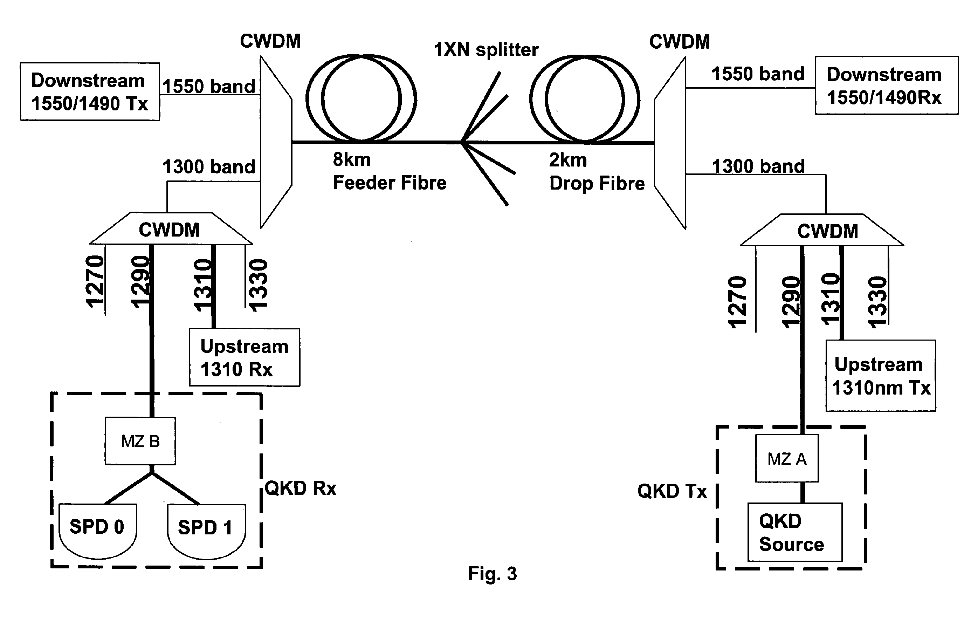

Fig. 3 shows an experimental setup for Quantum Key Distribution in a Passive Optical Network with new Raman suppression of the invention. One end-user out of possible 32 is shown on the right hand side of the diagram. The upstream QKD and conventional data channels operate in the 1300nm band at 1290 and 1310nm respectively and are time synchronised as described above. Two other channels at 1270 and 1330nm that are currently unpopulated could be used for additional upstream channels. The conventional downstream channel operates at either 1490 or 1550nm wavelength, or both. CWDM=coarse wavelength division multiplexer, MZ A/B= phase modulators and interferometers for encoding/decoding QKD data, SPD=single photon detector.

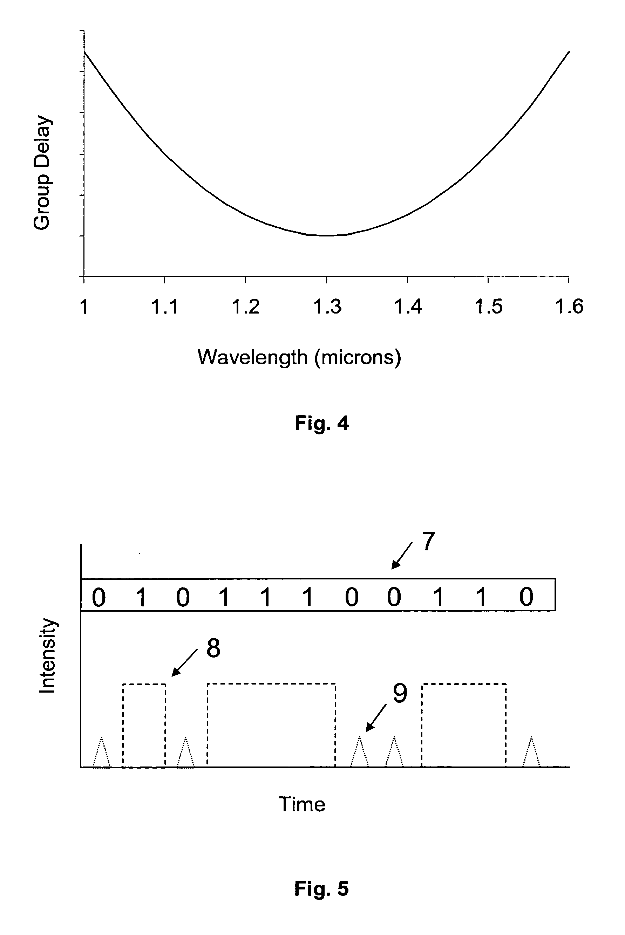

The invention provides time-synchronised transmission of data on the (polarisation or phase-modulated) QKD channel and the (on-off modulated) conventional channel such that a QKD bit is only transmitted when a zero, or sequence of zeros, is transmitted on the conventional channel. Also, there is co-directional propagation of the QKD and conventional channel. Further, there is dispersion management through wavelength selection or control of fibre properties or other means such that the 'walk-off in time of the QKD pulses and the Raman pulses generated by the ones on the conventional channel is less than or of the order of one bit period. The latter can be achieved, for example, by placing the conventional and QKD channel wavelengths close to the point where the group velocity-induced time delay for optical pulses propagating in the fibre reaches a minimum. As shown in Fig. 4, this dispersion minimum occurs at a wavelength of 1.3microns in standard fibre.

As illustrated in Fig. 5, under these conditions the Raman cross-talk (8) becomes strongly modulated, showing the approximately same temporal structure as the conventional data pattern (7). Since the QKD data bits (9) coincide with zeros on the conventional channel the instantaneous cross-talk is minimised and in principle can be reduced to an arbitrarily small level by increasing the on-off modulation extinction ratio of the conventional channel optical source. In practice, the WDM filters used in the system to combine and separate the QKD and conventional channels will typically be narrower than the Raman band and hence will also contribute to suppression of the cross-talk. However, specifically-tailored narrow notch filters with high out of band blocking will not be required.

The system allows operation of QKD on networks where Raman scattering occurs across all available wavelength windows and also enables the use of low cost optical filter technology. In particular the scheme enables QKD to be readily implemented on multi-user, optical access networks using standardised wavelength allocation plans. In this application the QKD system can be used to prevent unauthorised access to services offered on the network.

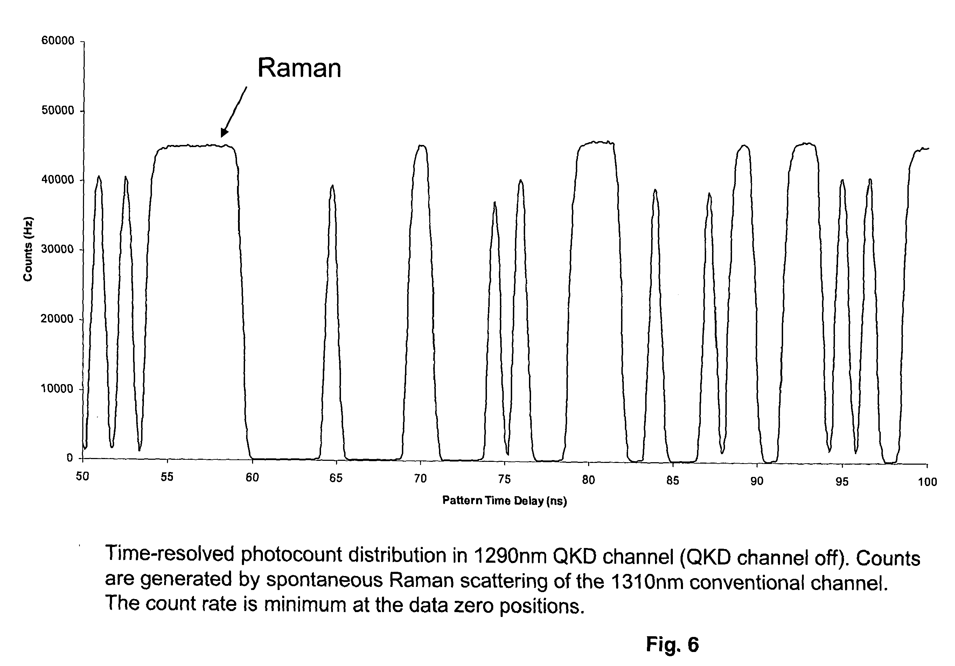

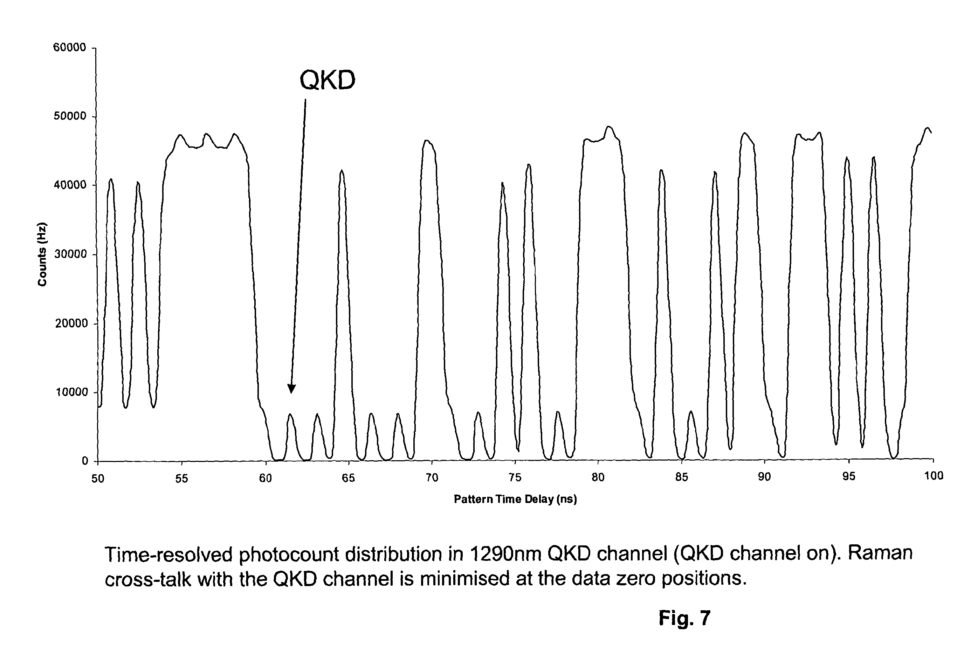

Figs. 6 and 7 show the photocounts in the 1290nm QKD channel that are generated by Raman scattering from the conventional 1310nm upstream data channel as a function of time delay. The Raman cross-talk is strongly modulated and matches the upstream data pattern. In particular the Raman count reaches the background level set by single photon detector noise whenever a zero is transmitted on the conventional upstream channel. In operation these temporal 'windows' in the Raman count would be used for sending QKD data with low cross-talk induced errors.

It will be appreciated that there is time-synchronised transmission of data on the (polarisation or phase-modulated) QKD channel and the (on-off modulated) conventional channel such that a QKD bit is only transmitted when a zero, or sequence of zeros, is transmitted on the conventional channel. Also, there is co-directional propagation of the QKD and conventional channel. Further, there is dispersion management through wavelength selection or control of fibre properties such that the 'walk-off' in time of the QKD pulses and the Raman pulses generated by the ones on the conventional channel is less than or of the order of one bit period.

Also, the system may employ enhanced on-off extinction ratio of the conventional channel optical source compared to standard applications. This is dependent of the level of required Raman-suppression, which will vary from application to application.

In addition, and for practical convenience, the QKD channel may also be operated continuously so that quantum bits are also sent when data ones are present on the conventional channel. However, it is understood that in these time periods the quantum bits will have a high error probability due to high instantaneous Raman cross-talk and hence should be discarded during the post-transmission phase of the QKD protocol.

The invention is not limited to the embodiments described but may be varied in construction and detail.

## Claims

1. An optical communication system comprising a transmitter comprising means for transmitting QKD data and a conventional data channel on a waveguide, the transmitter performing time synchronisation to transmit a QKD bit when a zero or sequence of zeros is transmitted on the conventional data channel.

2. An optical communication system as claimed in claim 1, wherein the QKD bits are also transmitted when a data one or sequence of ones is transmitted on the conventional channel, but are subsequently discarded during the post-transmission phase of the QKD protocol.

3. An optical communication system as claimed in claims 1 or 2, wherein the transmitter transmits the channels co-directionally.

4. An optical communication system as claimed in claims 1 to 3, wherein the system has optical characteristics such that walk-off in time of the QKD and conventional data channels is less than or of the order of one conventional channel bit period.

5. An optical communication system as claimed in claim 4, wherein the transmission wavelength is at or close to a minimum for a group delay vs. wavelength characteristic curve for the waveguide.

6. An optical communication system as claimed in claims 4 or 5, wherein dispersion compensation components or systems are employed to reduce walk-off to the required level.

7. An optical communication system as claimed in claims 5 or 6, wherein the wavelength is in the range of 1.2 to 1.65 µm.

8. An optical communication system as claimed in any preceding claim, wherein the system comprises coarse wavelength division multiplexers and de-multiplexers and/or other optical filters.

9. An optical communication system as claimed in any preceding claim, wherein the system is a multi-user passive optical network.

10. An optical communication system as in claim 9, wherein the users share the available network capacity by employing a time-division-multiple-access protocol such that the QKD and conventional channels transmitted by each user operate in burst-mode; and wherein the bursts of conventional and QKD data generated by a given user are bit-synchronous as in claim 1, but bursts generated by different users are not bit-synchronous with respect to each other.
